# EUROPÄISCHE PATENTANMELDUNG

(11) **EP 4 321 364 A1**
(43) Veröffentlichungstag der Anmeldung: **14.02.2024**
(21) Anmeldenummer: 23173867.5
(22) Anmeldetag: 17.05.2023
(51) Int. Cl.: B60L 1/00, B60L 53/14, B60L 53/30, B60L 53/66, B60L 58/12

(54) **WECHSELSPANNUNGSENERGIENETZ, STECKDOSE UND VERFAHREN ZUR ENERGIEVERTEILUNG**

(30) Priorität: 08.08.2022 DE 102022208225
(71) Anmelder: VOLKSWAGEN AG, 38440 Wolfsburg (DE)
(72) Erfinder: Baier, Daniel, 38542 Leiferde (DE); Brandt, Björn-Erik, 38542 Leiferde (DE); Quantmeyer, Florian, 38302 Wolfenbüttel (DE); Hahn, Erik, 38550 Isenbüttel (DE); Schwarze, Henrik, 39104 Magdeburg (DE)

(57) **Zusammenfassung**

Die Erfindung betrifft ein Wechselspannungsenergienetz (1) in einem Elektro- oder Hybridfahrzeug, umfassend eine Wechselspannungsladedose (2), mindestens eine Steckdose (4) für eine elektrische Last sowie einen bidirektionalen Wechselrichter (3), wobei der bidirektionale Wechselrichter (3) wechselspannungsseitig mit der Wechselspannungsladedose (2) und der mindestens einen Steckdose (4) verbunden ist und gleichspannungsseitig mit einer Hochvoltbatterie (5) eines Traktionsnetzes verbunden ist, wobei der Steckdose (4) mindestens ein Mikroprozessor (8) und ein Schaltelement (14) zugeordnet sind, wobei der Mikroprozessor (8) der Steckdose (4) über mindestens eine Kommunikationsleitung (6) mit einem Steuergerät (7) des Wechselrichters (3) verbunden ist, wobei in Abhängigkeit eines Zustandes das Steuergerät (7) einen Schaltbefehl für das mindestens eine Schaltelement (14) der Steckdose (4) erzeugt, eine Steckdose (4) und ein Verfahren.

## Beschreibung

Die Erfindung betrifft ein Wechselspannungsenergienetz in einem Elektro- oder Hybridfahrzeug, eine Steckdose und ein Verfahren zur Energieverteilung in einem Wechselspannungsenergienetz in einem Elektro- oder Hybridfahrzeug.

Es besteht ein wachsender Bedarf, einem Nutzer eines Kraftfahrzeugs eine Steckdose für elektrische Lasten zur Verfügung zu stellen.

Aus der DE 10 2019 127 032 A1 ist ein Hybridfahrzeug bekannt, umfassend einen elektrischen Ausgang mit einer Steckdose und einer Steuerung, die derart programmiert ist, eine benutzerspezifizierte Strombegrenzung für die Steckdose zu empfangen und als Reaktion darauf Abschalten der Steckdose, falls die Strombegrenzung überschritten wird.

Der Erfindung liegt das technische Problem zugrunde, ein verbessertes Wechselspannungsenergienetz in einem Elektro- oder Hybridfahrzeug zu schaffen sowie eine geeignete Steckdose sowie ein Verfahren zur Energieverteilung zur Verfügung zu stellen.

Die Lösung des technischen Problems ergibt sich durch ein Wechselspannungsenergienetz mit den Merkmalen des Anspruchs 1, eine Steckdose mit den Merkmalen des Anspruchs 9 und ein Verfahren zur Energieverteilung mit den Merkmalen des Anspruchs 10. Weitere vorteilhafte Ausgestaltungen der Erfindung ergeben sich aus den Unteransprüchen.

Das Wechselspannungsenergienetz in einem Elektro- oder Hybridfahrzeug umfasst eine Wechselspannungsladedose, mindestens eine Steckdose für eine elektrische Last sowie einen bidirektionalen Wechselrichter, wobei der bidirektionale Wechselrichter wechselspannungsseitig mit der Wechselspannungsladedose und der mindestens einen Steckdose verbunden ist und gleichspannungsseitig mit einer Hochvoltbatterie eines Traktionsnetzes verbunden ist, wobei der Steckdose mindestens ein Mikroprozessor und ein Schaltelement zugeordnet sind, wobei der Mikroprozessor der Steckdose über mindestens eine Kommunikationsleitung mit einem Steuergerät des Wechselrichters verbunden ist, wobei in Abhängigkeit eines Zustandes das Steuergerät einen Schaltbefehl für das mindestens eine Schaltelement der Steckdose erzeugt.

Mittels dieses Wechselspannungsenergienetzes kann dabei sehr flexibel die Energie verteilt werden. Vorzugsweise sind der Mikroprozessor und das Schaltelement in der Steckdose angeordnet. Dabei kann die Steckdose im Inneren des Kraftfahrzeugs angeordnet sein oder aber auch außen am Kraftfahrzeug angeordnet sein, wobei vorzugsweise mindestens eine Steckdose im Innern angeordnet ist. Der Mikroprozessor und andere Sensoriken in der Steckdose erhalten dabei vorzugsweise aus einem Niedervoltbordnetz ihre Versorgungsspannung. Ist beispielsweise die Wechselspannungsladedose mit einer externen Wechselspannungsladeinfrastruktur verbunden, wird die Steckdose über diese Ladespannung versorgt. Andernfalls wird die Steckdose aus der Hochvoltbatterie über den Wechselrichter mit Spannung versorgt.

In einer Ausführungsform ist der Zustand, in dessen Abhängigkeit das mindestens eine Schaltelement geschaltet wird, mindestens einer der folgenden Zustände:
- Erfassung einer gesteckten Last in der Steckdose,
- Ladezustand der Hochvoltbatterie,
- Leistungsaufnahme der gesteckten Last,
- Temperatur der Steckdose,
- Erfassung einer Ladeinfrastruktur an der Wechselspannungsladedose oder einer anderen Ladedose des Kraftfahrzeugs.

Somit wird das Schaltelement nur geschlossen, wenn überhaupt eine elektrische Last in die Steckdose eingesteckt ist. Alternativ oder ergänzend wird das Schaltelement in Abhängigkeit vom Ladezustand (SOC State of Change) der Hochvoltbatterie geschaltet, insbesondere wenn die Steckdose über den Wechselrichter aus der Hochvoltbatterie versorgt wird. Dabei kann mindestens ein Grenzwert für den Ladezustand vorgesehen sein, bei dessen Unterschreitung das Schaltelement geöffnet wird, um eine Tiefentladung der Hochvoltbatterie zu verhindern. Alternativ oder ergänzend kann der Zustand die Leistungsaufnahme der gesteckten Last sein. Dabei kann mindestens ein Grenzwert für die Leistungsaufnahme vorgesehen sein, bei dessen Überschreitung das Schaltelement geöffnet wird. Dabei kann der Grenzwert auch abhängig von weiteren Zuständen sein. Alternativ oder ergänzend kann ein Zustand auch sein, ob an der Wechselspannungsladedose oder einer anderen Ladedose (z.B. Gleichspannungsladedose) des Kraftfahrzeugs eine Ladeinfrastruktur erfasst wird.

In einer weiteren Ausführungsform weist die Steckdose eine Ländercodierung auf, wobei die Steckdose derart ausgebildet ist, die Ländercodierung an das Steuergerät des Wechselrichters zu übertragen. Dabei kann die Ländercodierung als Hardware- oder Software-Codierung ausgebildet sein. In Abhängigkeit der Ländercodierung kann dann das Steuergerät Frequenzen und Spannungslage am Wechselspannungsausgang des Wechselrichters einstellen.

In einer weiteren Ausführungsform ist die Wechselspannungsladedose direkt mit der Steckdose verbunden.

In einer alternativen Ausführungsform ist die Steckdose nur mit dem Wechselrichter verbunden. Der Vorteil dieser Ausführungsform ist, dass das Abschalten bzw. Spannungsfreischalten der Wechselspannungsladedose vereinfacht ist, beispielsweise um die Wechselspannungsladedose im Fahrbetrieb spannungsfrei zu schalten.

In einer weiteren Ausführungsform weist die Steckdose einen Stromsensor und/oder einen Temperatursensor und/oder eine Statusleuchte auf. Die Statusleuchte ist beispielsweise als LED ausgebildet und leuchtet, wenn das Schaltelement geschlossen ist.

In einer weiteren Ausführungsform weist das Wechselspannungsenergienetz mindestens zwei Steckdosen auf, wobei eine Steckdose als Master und die andere Steckdose als Slave ausgebildet sind. Hierdurch kann der schaltungstechnische Aufwand für die Slaves reduziert werden. Vorzugsweise werden über den Master alle Slaves zentral zu oder abgeschaltet.

In einer weiteren Ausführungsform ist das Wechselspannungsenergienetz derart ausgebildet, in einem Camper-Modus das Schaltelement permanent zu schließen, wobei das Steuergerät des Wechselrichters in einen Sleep-Modus geschaltet ist. Somit kann die Steckdose über Landstrom versorgt werden, wobei das Kraftfahrzeug schläft und nahezu keine Energie verbraucht. Landstrom wird auf Campingplätzen durch eine geeignete Infrastruktur zur Verfügung gestellt.

Die Steckdose für ein Wechselspannungsenergienetz weist mindestens einen Mikroprozessor und ein Schaltelement auf, wobei der Mikroprozessor eine Kommunikationsschnittstelle aufweist, wobei die Steckdose derart ausgebildet ist, über die Kommunikationsschnittstelle einen Zustand zu übertragen. Die Kommunikationsschnittstelle ist vorzugsweise als BusSchnittstelle, beispielsweise als LIN-Busschnittstelle, ausgebildet. Hinsichtlich der weiteren Ausgestaltungen wird voll inhaltlich auf die vorangegangenen Ausführungen Bezug genommen.

Das Verfahren zur Energieverteilung in einem Wechselspannungsenergienetz in einem Elektro- oder Hybridfahrzeug, wobei das Wechselspannungsenergienetz eine Wechselspannungsladedose, mindestens eine Steckdose für eine elektrische Last sowie einen bidirektionalen Wechselrichter aufweist, wobei der Wechselrichter wechselspannungsseitig mit der Wechselspannungsladedose und der mindestens einen Steckdose verbunden und gleichspannungsseitig mit einer Hochvoltbatterie eines Traktionsnetzes verbunden ist, wobei in der Steckdose ein Mikroprozessor und mindestens ein Schaltelement zugeordnet sind, wobei der Mikroprozessor der Steckdose über mindestens eine Kommunikationsleitung mit einem Steuergerät des Wechselrichters verbunden ist, ist durch die Verfahrensschritte gekennzeichnet, dass in Abhängigkeit eines Zustandes das Steuergerät einen Schaltbefehl für das mindestens eine Schaltelement der Steckdose erzeugt und an den Mikroprozessor übermittelt, der dann das mindestens eine Schaltelement ansteuert. Hinsichtlich der weiteren Ausgestaltung wird vollinhaltlich auf die vorangegangenen Ausführungen Bezug genommen.

Die Erfindung wird nachfolgend anhand bevorzugter Ausführungsbeispiele näher erläutert. Die Figuren zeigen:
- Fig. 1: ein schematisches Blockschaltbild eines Wechselspannungsenergienetzes,
- Fig. 2: ein schematisches Blockschaltbild einer Steckdose,
- Fig. 3: ein schematisches Blockschaltbild eines Wechselspannungsenergienetzes in einer alternativen Ausführungsform und
- Fig. 4: ein schematisches Blockschaltbild einer Steckdosenanordnung mit einem zentralen Steuergerät.

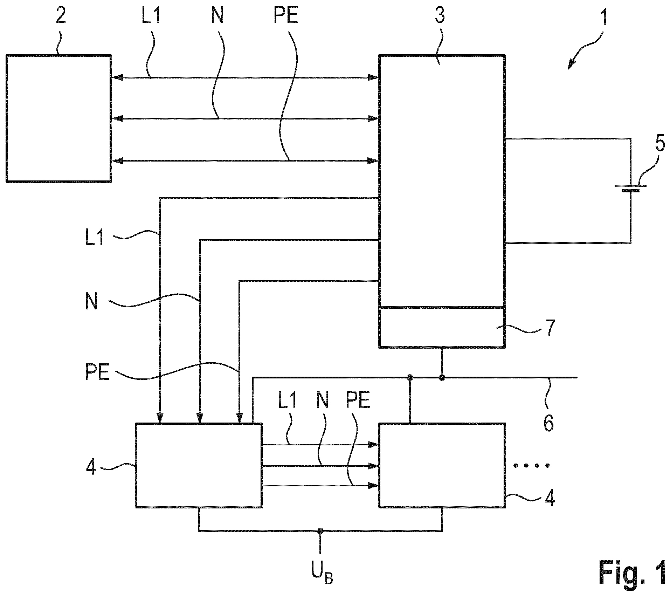

In der Fig. 1 ist schematisch ein Wechselspannungsenergienetz 1 dargestellt, das eine Wechselspannungsladedose 2, einen bidirektionalen Wechselrichter 3 und zwei Steckdosen 4 umfasst. Der bidirektionale Wechselrichter 3 ist gleichspannungsseitig mit einer Hochvoltbatterie 5 eines Traktionsnetzes eines Elektro- oder Hybridfahrzeugs verbunden. Wechselspannungsseitig ist der bidirektionale Wechselrichter 3 mit der Wechselspannungsladedose 2 und einer Steckdose 4 verbunden. Dabei ist weiter dargestellt, dass die Verbindung jeweils einer Phasenleitung L1, einen Neutralleiter N und einen Schutzleiter PE umfasst. In Realität sind noch weitere Phasen und Steuerleitungen zwischen Wechselspannungsladedose 2 und bidirektionalem Wechselrichter 3, aber da nur eine Phase zur Steckdose 4 geführt wird, ist die Darstellung beschränkt. In den Steckdosen 4 ist jeweils ein Mikroprozessor mit Sensorik angeordnet, was später noch näher erläutert wird, wobei die Versorgungsspannung U_{B} für die Mikroprozessoren und die Sensoriken von einem Niedervoltbordnetz des Kraftfahrzeugs kommt. Mindestens in der ersten Steckdose 4 ist mindestens ein Schaltelement angeordnet, mittels dessen die Phasenleitung L1 geschaltet werden kann. Zusätzlich kann auch noch der Neutralleiter N geschaltet werden. Dabei ist durch die Doppelpfeile angedeutet, dass der Wechselrichter 3 auch Leistung ins externe Wechselspannungsnetz zurückspeisen kann, was aber nicht zwingend ist. Weiter ist dargestellt, dass die Phase L1, der Neutralleiter N und der Schutzleiter PE durch die eine Steckdose 4 zur anderen Steckdose durchgeschleift wird. Die Steckdosen 4 sind über eine Kommunikationsleitung 6, die beispielsweise als LIN-Bus ausgebildet ist, mit einem Steuergerät 7 des Wechselrichters 3 verbunden.

Mittels diesem Wechselspannungsenergienetz 1 können nun die Steckdosen 4 in verschiedenen Situationen unterschiedlich versorgt werden, wobei diese im Fehlerfall und in bestimmten Situationen über das Schaltelement abgeschaltet werden können. Dabei ist vorzugsweise mindestens eine Steckdose 4 im Innern des Kraftfahrzeugs angeordnet. Wenn die Wechselspannungsladedose 2 mittels eines Ladesteckers mit einer externen Ladeinfrastruktur verbunden ist, wird über den Wechselrichter 3 die Hochvoltbatterie 5 geladen. Dabei kann eine Phasenleitung L1, der Neutralleiter N und der Schutzleiter PE im Wechselrichter 3 direkt zur Steckdose 4 durchgeschleift werden. Alternativ kann auch vorgesehen sein, dass separate Leitungen vorgesehen sind, wobei der Wechselrichter 3 die Spannungssignale für die Phasenleitung L1 für die Steckdose 4 durch Wandlung einer Gleichspannung erzeugt. Letzteres ist zwar energetisch etwas schlechter, dafür werden alle Phasenleitungen gleichmäßig belastet. Ist hingegen kein Ladestecker in der Wechselspannungsladedose 2, so wird die Steckdose 4 aus der Hochvoltbatterie 5 über den Wechselrichter 3 versorgt, was auch während der Fahrt erfolgen kann oder aber, wenn die Hochvoltbatterie 5 mittels Gleichspannung geladen wird. Insbesondere im Fahrbetrieb, aber auch im Stand, kann dabei ein Grenzwert für den Ladezustand der Hochvoltbatterie 5 vorgegeben sein, wobei bei Unterschreitung die Steckdosen 4 über die Schaltelemente abgeschaltet werden. Weiter ist ein Camper-Modus vorgesehen, der beispielsweise über eine Anzeige- und Bedieneinheit aktiviert werden kann. Dabei werden die Steckdosen 4 mit Landstrom über die Wechselspannungsladedose 2 versorgt, wobei der Wechselrichter 3 die Schaltelemente der Steckdosen 4 permanent durchschaltet und anschließend in einem Sleep-Modus übergeht, wobei die elektrische Energie durch den Wechselrichter 3 zu den Steckdosen 4 durchgeschleift wird.

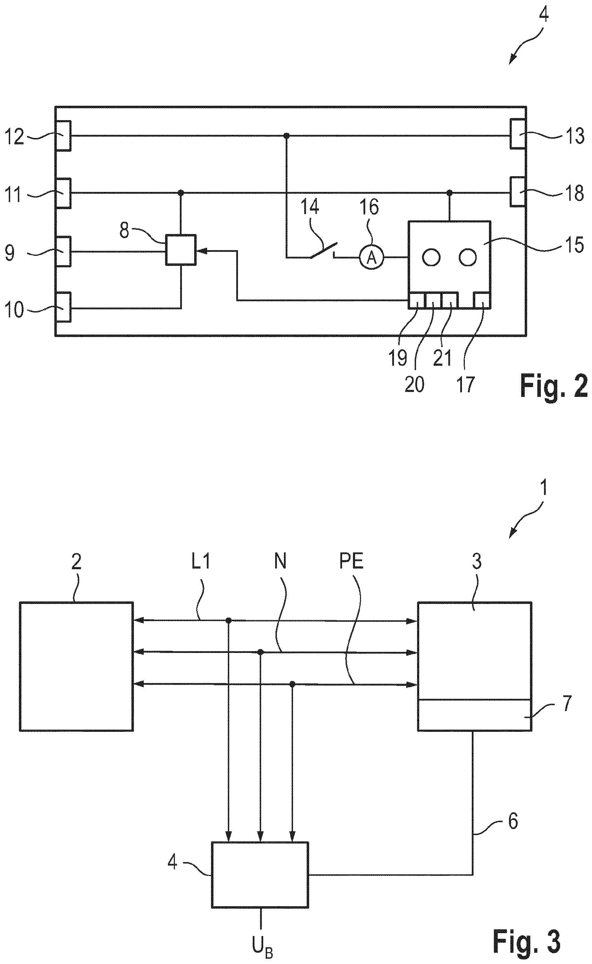

In der Fig. 2 ist schematisch ein Blockschaltbild einer Steckdose 4 dargestellt. Die Steckdose 4 weist einen Mikroprozessor 8 auf, der mit einer Kommunikationsschnittstelle 9 verbunden ist, über die die Steckdose 4 mit dem Wechselrichter 3 kommuniziert, beispielsweise über einen LIN-Bus. Weiter ist der Mikroprozessor 8 mit einer Hardware-Codierung 10 verbunden, mittels derer der Steckdose 4 eine eindeutige Adresse zugeordnet wird (z.B. LIN-Adresse). Weiter weist die Steckdose 4 eine Schnittstelle 11 für die Versorgungsspannung U_{B} auf. An einem Wechselspannungseingang 12 liegt dann die Phasenleitung L1 an, die einerseits zu einem Wechselspannungsausgang 13 durchgeschleift wird und andererseits über ein Schaltelement 14 zu einer Buchse 15, in die dann eine elektrische Last mit ihrem Stecker eingesteckt werden kann. Aus Übersichtsgründen wurde auf die Darstellung des Neutralleiters N und des Schutzleiters PE (siehe Fig. 1) verzichtet.

Zwischen dem Schaltelement 14 und der Buchse 15 ist ein Stromsensor 16 angeordnet. An der Buchse 15 ist eine LED 17 als Statusleuchte angeordnet, die optisch den Schaltzustand des Schaltelements 14 signalisiert, wobei das Schaltelement 14 beispielsweise als Relais oder Leistungstransistor ausgebildet ist. Dabei kann auch in der nicht dargestellten Leitung für den Neutralleiter N ein Schaltelement angeordnet sein, was aber nicht zwingend ist. Die LED 17 erhält dabei ebenfalls die Spannungsversorgung über die Schnittstelle 11, wobei die Spannungsversorgung U_{B} wie die Wechselspannung zu einem Ausgang 18 durchgeschleift wird, sodass diese für eine weitere Steckdose 4 zur Verfügung steht. Weiter ist an der Buchse 15 ein Temperatursensor 19, eine Ländercodierung 20 und ein Sensor 21 zur Erfassung einer gesteckten Last angeordnet, der beispielsweise als Endschalter ausgebildet ist. Der Temperatursensor 19, die Ländercodierung 20 und der Sensor 21 sind datentechnisch mit dem Mikroprozessor 8 verbunden. Diese Daten übermittelt der Mikroprozessor 8 an das Steuergerät 7 des Wechselrichters 3, das dann Frequenz und Spannungsamplitude entsprechend an die Ländercodierung anpassen kann. Mittels des Stromsensors 16 kann dann die Leistungsaufnahme eines gesteckten Verbrauchers ermittelt werden. Dabei kann der Wechselrichter 3 eine maximale Leistungsaufnahme vorgeben, bei deren Überschreitung durch das Schaltelement 14 die Steckdose 4 abgeschaltet wird. Dabei kann der Grenzwert für die maximale Leistungsaufnahme in Abhängigkeit von anderen Parametern angepasst werden (z.B. SOC der Hochvoltbatterie 5). Bezüglich der Temperatur kann der Mikroprozessor 8 auch autark das Schaltelement 14 betätigen, wenn beispielsweise ein Grenzwert für die Temperatur überschritten wird. Dabei ist vorzugsweise das Schaltelement 14 offen, wenn der Sensor 21 keine gestreckte Last detektiert.

Der Wechselrichter 3 bzw. das Steuergerät 7 des Wechselrichters 3 kann somit eine gezielte Energieverteilung steuern und je nach Zustand die Steckdosen 4 zu- oder abschalten.

Weiter können die Steckdosen 4 auch in einer Master-Slave-Konfiguration verschaltet sein, wobei nur in einer Steckdose 4 ein Mikroprozessor 8 und das oder die Schaltelemente 14 angeordnet sind, wobei die Slaves ihre Sensorsignale an den Master übermitteln. Der Vorteil ist der geringe schaltungstechnische Aufwand für die Slaves, wobei jedoch die Steckdosen 4 nur in ihrer Gesamtheit zu- oder abgeschaltet werden können.

In der Fig. 3 ist eine alternative Ausführungsform für das Wechselspannungsenergienetz 1 dargestellt, wobei nur eine Steckdose 4 dargestellt ist, die direkt mit der Wechselspannungsladedose 2 verbunden ist. In diesem Fall können nicht dargestellte Schaltelemente in der Wechselspannungsladedose 2 angeordnet sein, um die Wechselspannungsladedose 2 im Fahrbetrieb spannungsfrei zu schalten, obwohl die Steckdosen 4 über den Wechselrichter 3 mit Spannung versorgt werden.

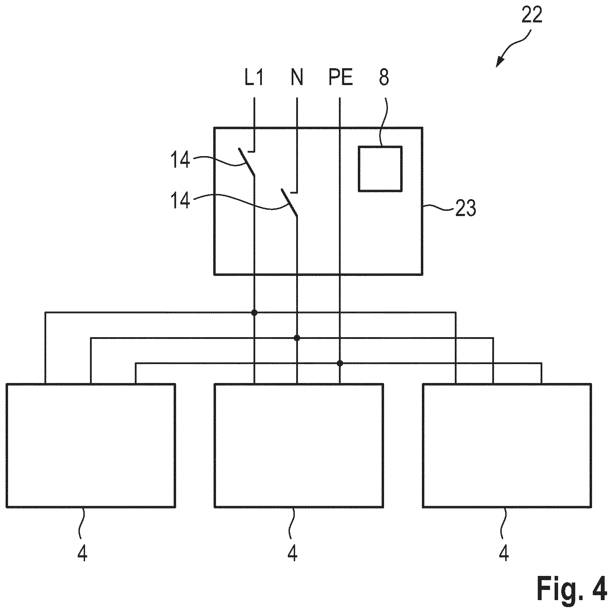

In der Fig. 4 ist schließlich eine alternative Steckdosenanordnung 22 dargestellt, die ähnlich der Master-Slave-Anordnung ist, wobei jedoch der Mikroprozessor 8 und die Schaltelemente 14 in einem separaten zentralen Steuergerät 23 angeordnet sind, wobei das Steuergerät 23 den Steckdosen 4 zugeordnet ist. Die übrigen Sensoriken wie beispielsweise Stromsensor 16, Temperatursensor 19, Ländercodierung 20, Sensor 21 können dann lokal in den Steckdosen 4 angeordnet sein.

### Bezugszeichenliste

- 1: Wechselspannungsenergienetz
- 2: Wechselspannungsladedose
- 3: bidirektionaler Wechselrichter
- 4: Steckdose
- 5: Hochvoltbatterie
- 6: Kommunikationsleitung
- 7: Steuergerät
- 8: Mikroprozessor
- 9: Kommunikationsschnittstelle
- 10: Hardware-Codierung
- 11: Schnittstelle
- 12: Wechselspanungseingang
- 13: Wechselspannungsausgang
- 14: Schaltelement
- 15: Buchse
- 16: Stromsensor
- 17: LED
- 18: Ausgang
- 19: Temperatursensor
- 20: Ländercodierung
- 21: Sensor
- 22: Steckdosenanordnung
- 23: Steuergerät

## Patentansprüche

1. Wechselspannungsenergienetz (1) in einem Elektro- oder Hybridfahrzeug, umfassend eine Wechselspannungsladedose (2), mindestens eine Steckdose (4) für eine elektrische Last sowie einen bidirektionalen Wechselrichter (3), wobei der bidirektionale Wechselrichter (3) wechselspannungsseitig mit der Wechselspannungsladedose (2) und der mindestens einen Steckdose (4) verbunden ist und gleichspannungsseitig mit einer Hochvoltbatterie (5) eines Traktionsnetzes verbunden ist, wobei der Steckdose (4) mindestens ein Mikroprozessor (8) und ein Schaltelement (14) zugeordnet sind, wobei der Mikroprozessor (8) der Steckdose (4) über mindestens eine Kommunikationsleitung (6) mit einem Steuergerät (7) des Wechselrichters (3) verbunden ist, wobei in Abhängigkeit eines Zustandes das Steuergerät (7) einen Schaltbefehl für das mindestens eine Schaltelement (14) der Steckdose (4) erzeugt.

2. Wechselspannungsenergienetz nach Anspruch 1, **dadurch gekennzeichnet, dass** der Zustand mindestens einer der folgenden Zustände ist:
- Erfassen einer gesteckten Last in der Steckdose (4),
- Ladezustand der Hochvoltbatterie (5),
- Leistungsaufnahme der gesteckten Last,
- Temperatur der Steckdose (4),
- Erfassung einer Ladeinfrastruktur an der Wechselspannungsladedose (2) oder einer anderen Ladedose des Kraftfahrzeugs.

3. Wechselspannungsenergienetz nach einem der vorangegangenen Ansprüche, **dadurch gekennzeichnet, dass** die Steckdose (4) eine Ländercodierung (20) aufweist, wobei die Steckdose (4) derart ausgebildet ist, die Ländercodierung (20) an das Steuergerät (7) des Wechselrichters (3) zu übertragen.

4. Wechselspannungsenergienetz nach einem der vorangegangenen Ansprüche, **dadurch gekennzeichnet, dass** die Wechselspannungsladedose (2) direkt mit der Steckdose (4) verbunden ist.

5. Wechselspannungsenergienetz nach einem der Ansprüche 1 bis 3, **dadurch gekennzeichnet, dass** die Steckdose (4) nur mit dem Wechselrichter (3) verbunden ist.

6. Wechselspannungsenergienetz nach einem der vorangegangenen Ansprüche, **dadurch gekennzeichnet, dass** die Steckdose (4) einen Stromsensor (16) und/oder einen Temperatursensor (19) und/oder eine Statusleuchte aufweist.

7. Wechselspannungsenergienetz nach einem der vorangegangenen Ansprüche, **dadurch gekennzeichnet, dass** mindestens zwei Steckdosen (4) vorhanden sind, wobei eine Steckdose (4) als Master und die anderen Steckdosen (4) als Slave ausgebildet sind.

8. Wechselspannungsenergienetz nach einem der vorangegangenen Ansprüche, **dadurch gekennzeichnet, dass** das Wechselspannungsenergienetz (1) derart ausgebildet ist, in einem Computer-Modus das Schaltelement (14) permanent zu schließen, wobei das Steuergerät (7) des Wechselrichters (3) in einem Sleep-Modus geschaltet wird.

9. Steckdose (4) für ein Wechselspannungsenergienetz, wobei in der Steckdose (4) mindestens ein Mikroprozessor (8) und ein Schaltelement (14) angeordnet ist, wobei der Mikroprozessor (8) eine Kommunikationsschnittstelle (9) aufweist, wobei die Steckdose (4) derart ausgebildet ist, über die Kommunikationsschnittstelle (9) einen Zustand zu übertragen.

10. Verfahren zur Energieverteilung in einem Wechselspannungsenergienetz (1) in einem Elektro- oder Hybridfahrzeug, wobei das Wechselspannungsenergienetz (1) eine Wechselspannungsladedose (2), mindestens eine Steckdose (4) für eine elektrische Last sowie einen bidirektionalen Wechselrichter (3) aufweist, wobei der bidirektionale Wechselrichter (3) wechselspannungsseitig mit der Wechselspannungsladedose (2) und der mindestens einen Steckdose (4) verbunden und gleichspannungsseitig mit einer Hochvoltbatterie (5) eines Traktionsnetzes verbunden ist, wobei der Steckdose (4) mindestens ein Mikroprozessor und mindestens ein Schaltelement zugeordnet sind, wobei der Mikroprozessor (8) der Steckdose (4) über mindestens eine Kommunikationsleitung (6) mit einem Steuergerät (7) des Wechselrichters (3) verbunden ist, wobei in Abhängigkeit eines Zustandes das Steuergerät (7) einen Schaltbefehl für das mindestens eine Schaltelement (14) der Steckdose (4) erzeugt, an den Mikroprozessor (8) übermittelt, der dann das Schaltelement (14) ansteuert.
